# EUROPEAN PATENT APPLICATION

(11) **EP 3 505 420 A1**
(43) Date of publication of application: **03.07.2019**
(21) Application number: 18212477.6
(22) Date of filing: 13.12.2018
(51) Int. Cl.: B62B 5/06, B62B 9/20

(54) **REMOVABLE HANDLE FOR BABY STROLLER AND BABY STROLLER CONTAINING IT**

(30) Priority: 14.12.2017 PT 201711482
(71) Applicant: Bebecar-utilidades para criança S.A., 4535 Lourosa (PT)
(72) Inventor: OLIVEIRA SANTOS, EMANUEL FERNANDO, 4505-685 CALDAS DE S. JORGE (PT); ANTUNES CARVALHO FERREIRA, VALDEMAR, 4520-615 SÃO JOÃO DE VÊR (PT)
(74) Representative: do Nascimento Gomes, Rui

(57) **Abstract**

The present invention is in the field of baby strollers. It is an object of the present invention a removable handle for baby stroller comprising a tubular shaped handle section (B) and two fastening means (A) to the stroller, which are arranged substantially parallel to each other and coupled to both ends (5) of the handle section (B), wherein the ends (5) of the handle section (B) and the fastening means (A) are such that they couple by insertion of one of the elements into the other, and the coupling between each of said fastening means (A) and each end (5) of the handle section (B) is carried out through the engagement of a latch in a closure (4) notch. Additionally, it is also an object of the present invention a baby stroller comprising said handle. The present invention thus enables an easy and robust coupling between the handle section (B) and a stroller, while allowing the handle section (B) to be easily replaced.

## Description

### FIELD OF THE INVENTION

The present invention is in the field of baby strollers.

### BACKGROUND OF THE INVENTION

The present invention finds a closer background in baby strollers with handles, these handles being an integral element of the stroller frame, not allowing a suitable uncoupling for an easy exchange, although they allow an articulation between a section where the user grabs and the stroller frame, allowing adjusting the angle between the handle section and the stroller frame.

The present invention thus enables changing the handle of a baby stroller, namely for reasons of wear, simply and ensuring the maintenance of the strength in the attachment of the handle to the stroller frame.

### SUMMARY OF THE INVENTION

Thus, it is object of the present invention a removable handle for a baby stroller comprising a tubular shaped handle section (B) and two fastening means (A) to the stroller, the fastening means (A) being arranged substantially parallel to each other and coupled to both ends (5) of said handle section (B), wherein the ends (5) of the handle section (B) and the fastening means (A) are such that:
- each set of the end (5) of the handle section (B) and fastening means (A) is coupled by insertion of one of the elements into the other, and
- the coupling between each of said fastening means (A) and each end (5) of the handle section (B) is carried out through the engagement of a latch in a closure (4) notch.

The present invention thus enables an easy and robust coupling between the handle section (B) and a stroller through the fastening means (A), while easily allowing coupling and uncoupling the fastening means (A) and the handle section (B), thus making it easy the replacement of the handle section (B).

In an advantageous aspect of the handle of the present invention, each end (5) of the handle section (B) is tubular, and each of the fastening means (A) is adapted to be inserted inside the respective end. This allows a coupling that is not only more robust, since the insertion supports the coupling between both elements, but also enables the closure (4) and the latch to be hidden inside the insertion.

In one inventive aspect of the handle of the present invention, said notched closure (4) comprises an elongated piece including the notch at one of its ends, the other end being connected to a spring (3) and a knob (2), wherein the action of the knob (2) on this end and spring (3) makes the elongated piece to rotate, changing the position of the notch at least in the latch width. Such elongated piece allows, in a simplified and highly effective manner - which allows for high reliability and manufacturing efficiency -, manually coupling and uncoupling the fastening means (A) from the handle section (B).

In yet another inventive aspect of the present handle, each of the ends (5) of the handle section (B) contains a protrusion extending perpendicularly to the surface of the handle section (B) and, correspondingly, the fastening means (A) comprise a stop adapted to receive said protrusion, when coupling one of said fastening means (A) in one of the said ends (5). This allows that the final coupling position of the handle section (B) and the fastening means (A) is well defined, avoiding an excessive or insufficient overlap.

In another inventive aspect of the present invention, the handle section (B) is U-shaped. This enables the handle section (B) to be a single element, thus allowing a parallel orientation of both ends (5), which engage to the fastening means (A).

It is also an object of the present invention a baby stroller comprising said handle.

In particular, the baby stroller further comprises second coupling elements complementary to said coupling elements comprised in the handle.

### DESCRIPTION OF THE FIGURES

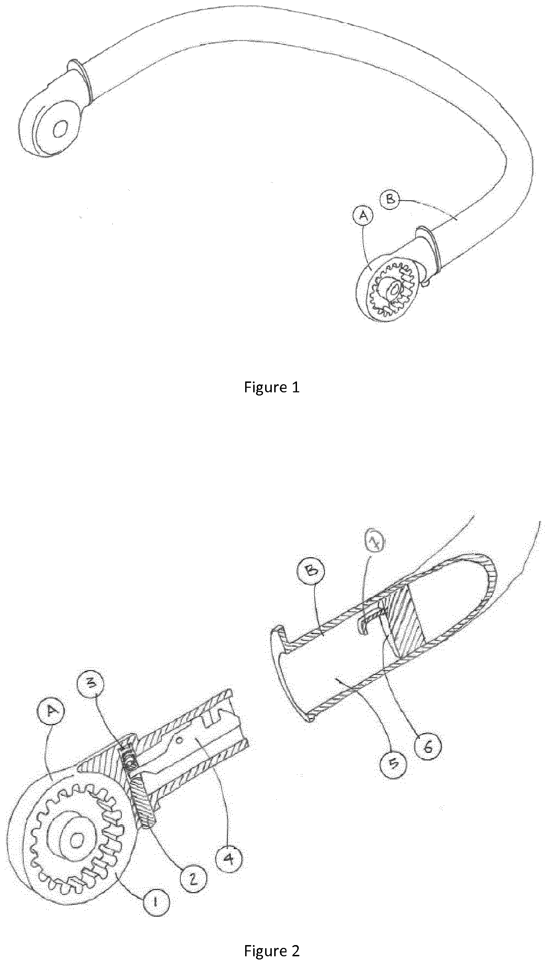

Figure 1 - a representation of a handle according to an embodiment of the present invention, comprising fastening means (A) with an articulated coupling enabling rotation, and the U-shaped handle section (B).
Figure 2 - an exploded view of a detail of the handle according to an embodiment of the present invention, comprising fastening means (A) with the closure (4), which in turn comprises the elongated piece, the spring (3) and the knob (2), as well as the articulated coupling allowing rotation. The detail of the handle further comprises an end (5) of the handle section (B), which contains the latch therein, secured to the diametrical piece.

### DETAILED DESCRIPTION OF THE INVENTION

In one preferred embodiment of the present invention, each of the fastening means (A) comprises said notched closure (4), and each end (5) comprises said latch. Preferably, the handle section (B) further comprises a diametrical piece adapted to stay secured internally to the tube formed by the handle section (B), that diametrical piece containing the latch.

In a preferred embodiment of the handle of the present invention, each of the fastening means (A) comprises a coupling element (1) to a baby stroller, said coupling element (1) being disposed at a point diametrically opposite to said closure (4). Preferably each coupling element (1) is adapted to be an articulated coupling to a baby stroller, such that the handle can be coupled in articulately way in a plurality of distinct positions with respect to an axis perpendicular to the fastening means.

Preferably, the fastening means (A) and the handle section (B) are made of plastic. In particular, and preferably, the latch is metallic.

As is apparent to one skilled in the art, the present invention should not be limited to the embodiments described herein, and various changes are possible which remain within the scope of the present invention.

Of course, the preferred embodiments shown above are combinable, in the different possible forms, avoiding repeating all such combinations here.

## Claims

1. Removable handle for baby stroller, **characterized in that** it comprises a tubular shaped handle section (B) and two fastening means (A) to the stroller, which are arranged substantially parallel to each other and coupled to both ends (5) of said handle section (B), wherein said ends (5) of the handle section (B) and fastening means (A) are such that:
- each set of an end (5) of the handle section (B) and fastening means (A) is coupled by insertion of one of the elements into the other, and
- the coupling between each of said fastening means (A) and each end (5) of the handle section (B) is carried out through the engagement of a latch in a closure (4) notch.

2. Handle according to the preceding claim, **characterized in that** each end (5) of the handle section (6) is tubular and each of the fastening means (A) is adapted to be inserted inside the respective end.

3. Handle according to any one of the preceding claims, **characterized in that** each of the fastening means (A) comprises said notched lock (4), and each end (5) comprises said latch.

4. Handle according to the preceding claim, **characterized in that** the handle section (B) further comprises a diametrical piece adapted to stay secured internally to the tube formed by the handle section (B), that diametrical piece containing the latch.

5. Handle according to any one of the preceding claims, **characterized in that** said notched closure (4) comprises an elongated piece including the notch at one of its ends, the other end being connected to a spring (3) and a knob (2), wherein the action of the knob (2) on this end and spring (3) makes the elongated piece to rotate, changing the position of the notch at least in the latch width.

6. Handle according to any one of the preceding claims, **characterized in that** each end (5) of the handle section (B) comprises a protrusion extending perpendicularly to the surface of the handle section (B) and, correspondingly, the fastening means (A) comprise a stop adapted to receive said protrusion, when coupling one of said fastening means (A) in one of the said ends (5).

7. Handle according to any one of the preceding claims, **characterized in that** each of the fastening means (A) comprises a coupling element (1) to a baby stroller, said coupling element (1) being disposed at a point diametrically opposite to said closure (4).

8. Handle according to the preceding claim, **characterized in that** each coupling element (1) is adapted to be an articulated coupling to a baby stroller, such that the handle can be coupled in articulately way in a plurality of distinct positions with respect to an axis perpendicular to the fastening means.

9. Handle according to any one of the preceding claims, **characterized in that** the fastening means (A) and the handle section (B) are made of plastic.

10. Handle according to any one of the preceding claims, **characterized in that** the latch is metallic.

11. Handle according to any one of the preceding claims, **characterized in that** the handle section (B) is U-shaped.

12. Baby stroller **characterized in that** it comprises a handle according to any one of the preceding claims and second coupling elements complementary to said coupling elements included in the handle.
